# EUROPEAN PATENT SPECIFICATION

(11) **EP 0 507 975 B1**
(45) Date of publication and mention of the grant of the patent: **29.11.1995**
(21) Application number: 91105777.6
(22) Date of filing: 11.04.1991
(51) Int. Cl.: F16F 1/36, B60G 3/10, B60G 7/00

(54) **Suspension system for a vehicle**
Aufhängungssystem für ein Fahrzeug
Système de suspension pour un véhicule

(43) Date of publication of application: 14.10.1992
(73) Proprietor: NHK SPRING CO., LTD., Yokohama-shi (JP)
(72) Inventor: Hiromoto, Shuji, c/o NHK Spring Co.,Ltd., Kanazawa-ku, Yokohama-shi (JP); Kitamura, Roh, c/o NHK Spring Co.,Ltd., Kanazawa-ku, Yokohama-shi (JP); Yoshino, Fumitaka, c/o NHK Spring Co.,Ltd., Kanazawa-ku, Yokohama-shi (JP); Kamisaku, Takeshi, c/o NHK Spring Co.,Ltd., Kanazawa-ku, Yokohama-shi (JP); Takehana, Toshihiro, c/o NHK Spring Co.,Ltd., Kanazawa-ku, Yokohama-shi (JP)
(74) Representative: Henkel, Feiler, Hänzel & Partner

(56) References cited:
- EP-A- 0 213 367
- FR-A- 2 601 905
- PATENT ABSTRACTS OF JAPAN vol. 13, no. 484 (M-886)(3832)2 November 1989 & JP-A-1 190 508 ( MAZDA MOTOR CORP ) 31 July 1989
- ACE [ENGINEERING] vol. 230, no. 10, November1990, page 2; 'GKN Composites' leaf springs move up a weight'
- PATENT ABSTRACTS OF JAPAN vol. 14, no. 181 (M-961)(4124)11 April 1990 & JP-A-2 031 906 ( MAZDA MOTOR CORP ) 1 February 1990
- DESIGN ENGINEERING no. 2, February 1985, pages 10- 11; 'Composite Suspension combines 3 functions in a single part'

## Description

The present invention relates to a suspension system as defined by the features of the preamble of claim 1 for use in a vehicle such as an automobile.

Steel leaf springs or coil springs have conventionally been used as suspension springs for vehicles. Conventional vehicular suspension systems, which are typified by McPherson struts and double wishbones, comprise steel compression coil springs for suspension, used to support the sprung weight, and suspension arms extending in the transverse direction of the vehicle body. The suspension arms, which are rigid bodies, are mounted on the vehicle body by means of pivots so that they can vertically swing around the pivots. A hub carrier is mounted on the distal end portion of each suspension arm.

The suspension coil springs, which are disposed so that their axes extend in the vertical direction, have a great upward projection. Therefore, spaces for storing the upper portions of the suspension springs are needed in the trunk room, engine room, etc. This results in a narrow interior space of the vehicle.

To cope with these circumstances, the inventors hereof have been developing cantilever spring arms to be used in place of the suspension springs. An FRP (fiber-reinforced plastic) spring arm is formed of a matrix resin and fibers. A fixed end of the spring arm is fixed to the vehicle body. A hub carrier or other means for supporting a wheel is attached to a free end of the arm. The spring arm can bend in the vertical direction.

Since the spring arm extends in the transverse direction of the vehicle body, it sometimes lacks in rigidity to stand a load acting in the longitudinal direction. To cope with this problem, the inventors hereof have proposed an arrangement such that a metallic reinforcing rod, for use as a rigid body, is combined with the spring arm. One end of the reinforcing rod is connected to the free end of the arm. The other end of the reinforcing rod is connected to the vehicle body by means of a bracket disposed in front or at the back of the fixed end of the arm. With use of this reinforcing rod, a load acting on the spring arm in the longitudinal or transverse direction can be reduced. If this metallic reinforcing rod is used in a suspension system, however, the whole system is heavy in weight.

If the rigid metallic reinforcing rod is connected to the FRP spring arm, which is not a rigid body, the spring arm should be prevented from being hindered by the reinforcing rod as it bends in the vertical direction. Thus, the junction between the spring arm and the reinforcing rod has a complicated construction.

A suspension system for a vehicle with the features of the preamble of claim 1 is known from EP-A-0 213 367. This known suspension system connects a vehicle body and an axle means for supporting wheels. The suspension system comprises vertically deflectable front and rear cantilever spring arms formed in an endless shape from fiber reinforced matrix resin. One end of each front and rear spring arm is supported on the vehicle body by means of bolts fitted through holes bored in vertical walls provided at the end portions of the arms and through additional supporting plates. The opposite ends of the spring arms are connected to an axle-spindle bolt assembly by means of bolts fitted through holes bored in opposite end walls of the arms. This structure poses an important problem in that the structural strength of the fiber reinforced spring arms is reduced to a large extend by the holes bored into the arms.

It is the object of the present invention to provide a suspension system for a vehicle, whose upward projection is smaller than that of conventional suspension systems using suspension coil springs, and which has a light weight and can enjoy substantial strength to bear a load acting in the longitudinal or transverse direction of the vehicle body.

According to the present invention, there is provided a suspension system for a vehicle with the features of claim 1. Preferred embodiments of this suspension system are defined in the subclaims.

In the suspension system of the present invention, the sprung weight is elastically supported by means of the FRP spring arms. A vertical displacement of the wheels, which is caused when the vehicle runs on a rough road surface, is absorbed as the spring arms bend in the vertical direction. The front and rear spring arms cooperatively support a load acting in the longitudinal or transverse direction of the vehicle body. Thus, the suspension system of the present invention can exhibit rigidity as high as that of the conventional ones using the reinforcing rod. Since the vertical size of the spring arm is smaller than that of the conventional suspension systems using the coil springs, the vehicle can enjoy a wide interior space. Since the front and rear spring arms are made of FRP, moreover, they never rust and are light in weight.

This invention can be more fully understood from the following detailed description when taken in conjunction with the accompanying drawings, in which:
Fig. 1 is a perspective view of a suspension system according to a first embodiment of the present invention;
Fig. 2 is a front view of the suspension system shown in Fig. 1;
Fig. 3 is a bottom view showing part of an automobile provided with the suspension system shown in Fig. 1;
Fig. 4 is a perspective view of a bracket used in the suspension system shown in Fig. 1;
Fig. 5 is an exploded perspective view of a joint assembly used in the suspension system shown in Fig. 1;
Fig. 6 is a sectional view taken along line VI-VI of Fig. 1;
Fig. 7 is a perspective view of an apparatus for effecting the filament winding method;
Figs. 8 and 9 are sectional views individually showing modifications of a spring arm;
Fig. 10 is a perspective view showing an example in which elastic spacers are used for the bracket shown in Fig. 4;
Fig. 11 is a perspective view of a suspension system according to a second embodiment of the invention;
Fig. 12 is a perspective view of a bracket used in the suspension system shown in Fig. 11;
Fig. 13 is a perspective view showing a modification of the joint assembly;
Figs. 14, 15 and 16 are perspective views showing third, fourth, and fifth embodiments of the invention, respectively;
Fig. 17 is a perspective view of a suspension system according to a sixth embodiment of the invention;
Fig. 18 is a front view of the suspension system shown in Fig. 17; and
Fig. 19 is a bottom view showing part of an automobile provided with the suspension system shown in Fig. 17.

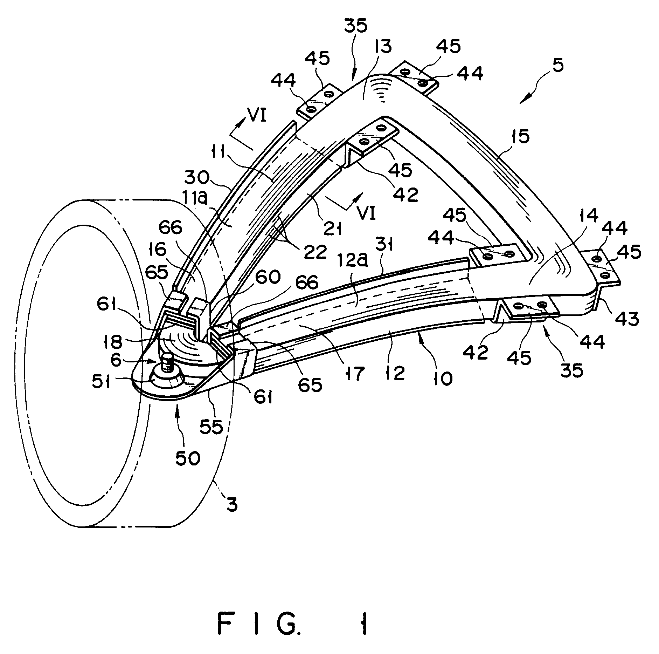

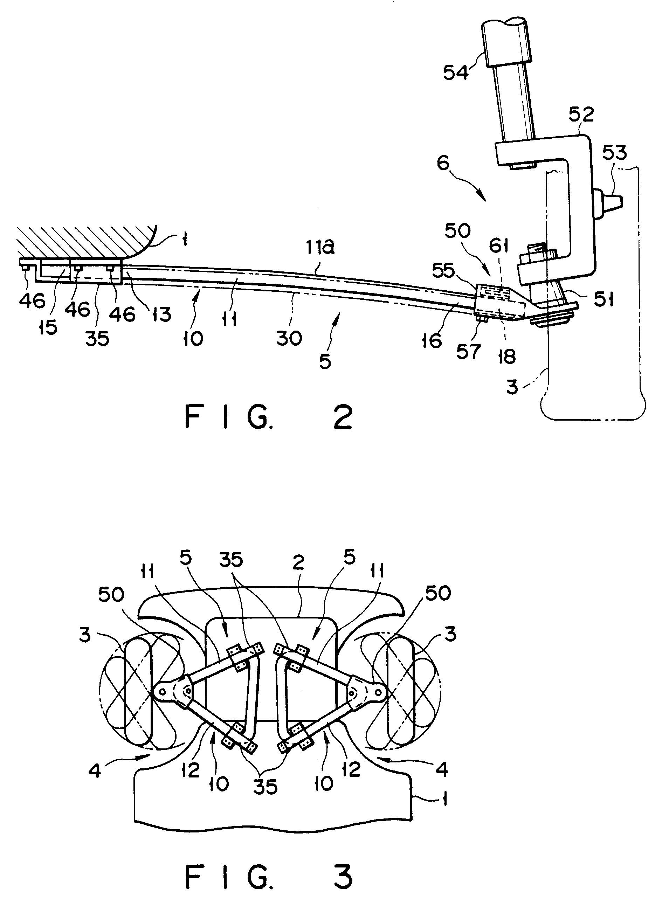

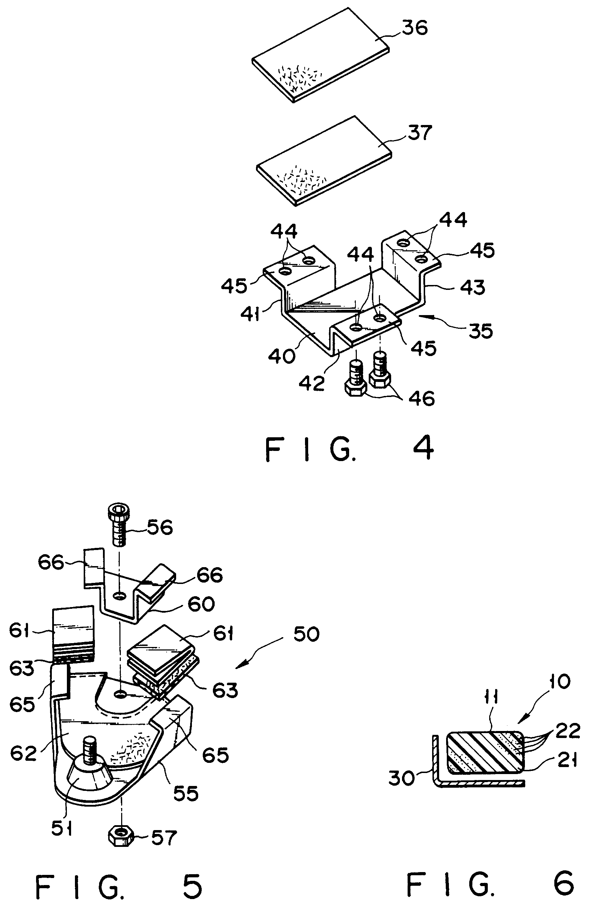

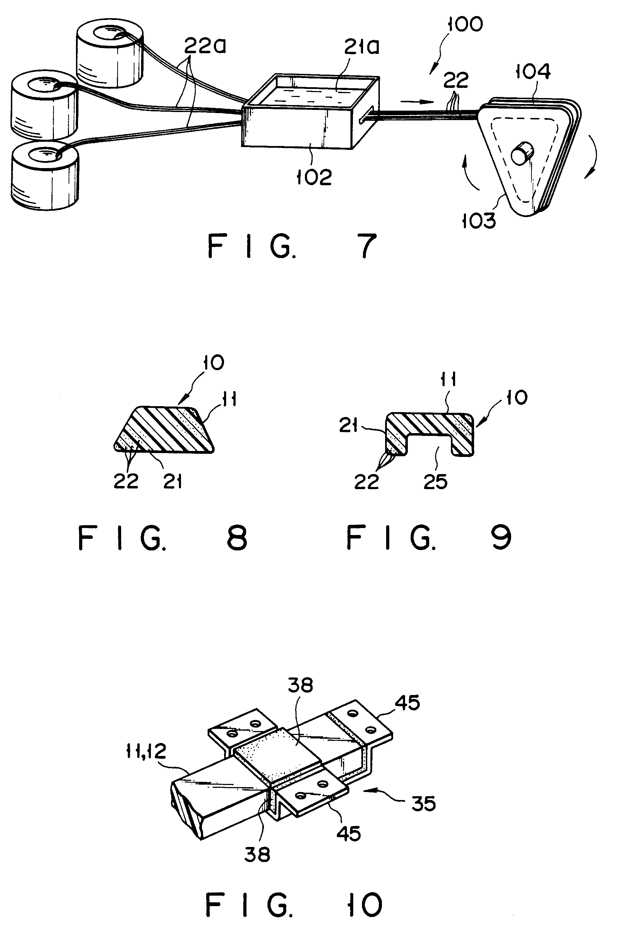

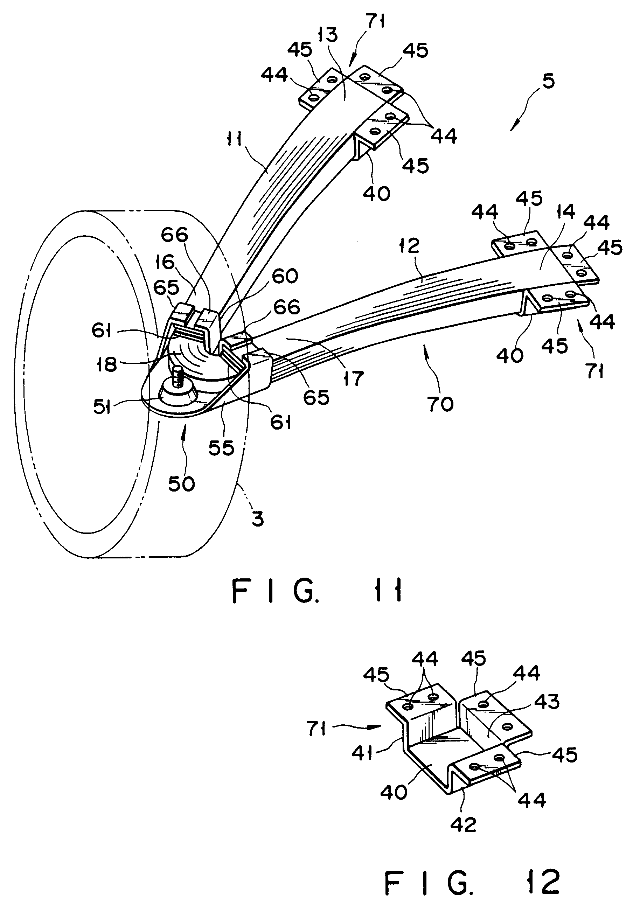

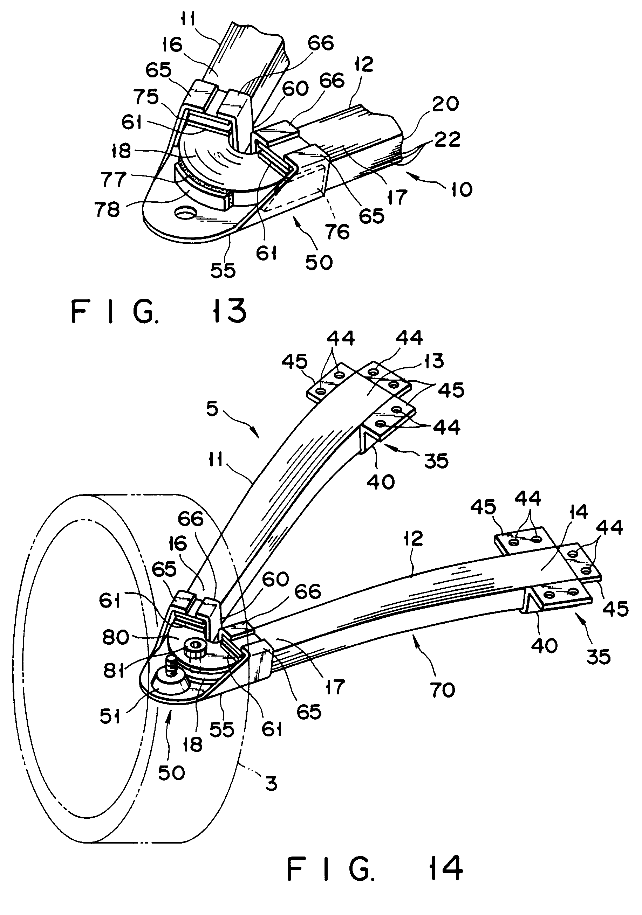

A first embodiment of the present invention will now be described with reference to the drawings of Figs. 1 to 6, which show a front suspension system for an automobile. As shown in Fig. 3, an engine room 2 is disposed at the front portion of a vehicle body 1. A pair of front wheels 3 are arranged individually on the right and left sides of the room 2. Each wheel 3, which is contained in a tire house 4, can be turned right and left so as to generate a locus having the shape of a circular arc, as indicated by the two-dot chain line in Fig. 3, by means of a conventional steering linkage (not shown). As shown in Fig. 1, a suspension system 5 is disposed between the vehicle body 1 and a member 6 for supporting its corresponding wheel 3.

The suspension system 5 comprises an FRP member 10, which includes a front spring arm 11 and a rear spring arm 12. The arms 11 and 12 have first end portions 13 and 14 fixed to the vehicle body 1 and second end portions 16 and 17 extending toward the wheel supporting member 6, respectively. Longitudinal intermediate portions 11a and 12a of the spring arms 11 and 12 are situated between the first end portions 13 and 14 and the second end portions 16 and 17, respectively.

The first end portions 13 and 14 are connected to each other by means of a bridge section 15 which extends in the longitudinal direction of the vehicle body 1. The second end portions 16 and 17 are connected to each other by means of a curved section 18.

The spring arms 11 and 12, bridge section 15, and curved section 18 are integrally formed by the filament winding method, using a matrix resin 21, such as epoxy and a large number of unidirectional continuous reinforcing fibers 22, such as glass fibers or carbon fibers. A filament winding apparatus 100 shown in Fig. 7 comprises a tank 102, which contains an uncured matrix resin 21a, and a mandrel 103. As a glass roving 22a formed of a large number of fibers 22 is passed through the tank 102, the resin 21a adheres to the fibers 22. The fibers 22 with the resin 21a thereon are wound around the mandrel 103. The mandrel 103 has a groove 104 on the outer peripheral surface thereof for forming the FRP member 10.

The FRP member 10 is formed by means of the apparatus 100. The fibers 22 contained in the member 10 continuously extend through the spring arms 11 and 12, bridge section 15, and curved section 18 substantially without a break. The fibers 22 are distributed throughout the cross section of the FRP member 10. Since the spring arms 11 and 12 are arranged in the shape of a V, as viewed from above, the wheels 3 cannot interfere with the arms 11 and 12 when they are turned.

As shown in Fig. 6, the spring arm 11 has a substantially rectangular cross section. The rear spring arm 12 has the same cross section as the arm 11. The cross section of each spring arm may be trapezoidal, as shown in Fig. 8. Alternatively, a recess 25 may be formed in each arm so as to extend in the longitudinal direction thereof, as shown in Fig. 9. The spring arms 11 and 12 may each be shaped like a taper leaf, with respect to the longitudinal direction, such that their respective second end portions 16 and 17 are thinner than the first end portions 13 and 14, or be shaped so that their width varies in the longitudinal direction.

Each of the spring arms 11 and 12 functions as a cantilever spring. More specifically, those regions which extend from the longitudinal intermediate portions 11a and 12a to their corresponding second end portions 16 and 17 can elastically bend in the vertical direction.

Guard plates 30 and 31 are provided near the spring arms 11 and 12, respectively. The plates 30 and 31 serve to prevent stones or some other hard objects, sprung from the road surface, from directly hitting the arms 11 and 12 while the automobile is running. To attain this, the guard plates 30 and 31 are situated in positions which face at least the respective bottom and front faces of the spring arms 11 and 12. The plates 30 and 31 are supported on their corresponding brackets 35 and a joint assembly 50 by means of suitable connecting means (not shown) lest they prevent the arms 11 and 12 from vertically bending. Instead of using the plates 30 and 31, flexible protective sheets may be attached individually on at least the respective bottom and front faces of the spring arms 11 and 12.

The respective first end portions 13 and 14 of the spring arms 11 and 12 are fixed to the vehicle body 1 by means of the metallic brackets 35, as shown in Fig. 4. Spacers 36 and 37 are bonded to the upper and lower surfaces, respectively, of each of the first end portions 13 and 14. Each spacer may be suitably formed of a thermoplastic fiber-reinforced plastic material containing short fibers and having a thickness of about 1 mm. The spacers 36 and 37 serve to prevent the spring arms 11 and 12 from wearing and to equalize surface pressures acting on the arms 11 and 12.

Each bracket 35 includes a plate section 40 superposed on its corresponding spring arm 11 or 12, a pair of rising walls 41 and 42 rising individually from the opposite side faces of the spring arm, a rising wall 43 rising from an end face of the arm, and mounting base sections 45 each having mounting holes 44. A bolt 46 is passed through each hole 44. The brackets 35 are fixed to the vehicle body 1 by means of the bolts 46.

The brackets 35 may be fixed to the vehicle body 1 by means of height adjusting blocks (not shown) so that the respective heights of the first end portions 13 and 14 are substantially equal. As shown in Fig. 10, elastic spacers 38, each formed of a rubbery elastic member, may be interposed between each of the spring arms 11 and 12 and its corresponding bracket 35. The rigidity of the junctions between the vehicle body 1 and the arms 11 and 12 can be adjusted by suitably selecting the degree of elasticity of the spacers 38. The elastic spacers 38 may be also used in the joint assembly 50.

The joint assembly 50 is attached to the curved section 18. A ball joint 51 is fixed to the assembly 50. A hub carrier 52 is turnably supported by means of the joint 51. A shock absorber 54 is mounted on the carrier 52, which is provided with a wheel spindle 53.

The joint assembly 50 comprises a metallic base plate 55, a clamp member 60 fixed to the plate 55 by means of a bolt 56 and a nut 57, wedge members 61, and spacers 62 and 63 for preventing the curved section 18 from wearing. Each wedge member 61 is tapered so that its thickness decreases toward its distal end. Each of the spacers 62 and 63 may be suitably formed of a thermoplastic fiber-reinforced plastic material containing short fibers and having a thickness of about 1 mm. The spacers 62 and 63 are bonded to the spring arms 11 and 12.

The base plate 55 of the joint assembly 50 is provided with retaining sections 65 which protrude inward from its top end. The clamp member 60 is provided with retaining sections 66 which protrude outward from its top end. The base plate 55 can be firmly fixed to the curved section 18 by inserting the wedge members 61 between the retaining sections 65 and 66 and the spring arms 11 and 12.

In the suspension system 5 constructed in this manner, the sprung weight is elastically supported by means of the two spring arms 11 and 12 which are made of FRP. The arms 11 and 12 function as suspension springs. Since they are combined in a truss structure, the paired spring arms 11 and 12 can exhibit substantial rigidity to stand forces acting in the longitudinal and transverse directions of the system 5. Thus, use of conventional reinforcing members, such as lateral rods, tension rods, etc., can be lessened or omitted, so that the suspension system 5 can be reduced in weight.

The respective second end portions 16 and 17 of the spring arms 11 and 12 are integrally formed through the medium of the curved section 18. Thus, the joint assembly 50 can be easily mounted on the end portions 16 and 17. In this suspension system 5, moreover, the sprung weight is supported by means of the two arms 11 and 12. Even if one of the arms 11 and 12 is damaged, therefore, the other cannot be damaged thereby. The upward projection of this system 5, using the spring arms 11 and 12, can be made smaller than that of conventional suspension systems which use suspension coil springs.

Fig. 11 shows a second embodiment of the present invention. In this embodiment, like or common reference numerals are used to designate the same or common portions as in the first embodiment. An FRP member 70 of the second embodiment, which is not provided with any element which is equivalent to the bridge section 15 described in the first embodiment, is additionally reduced in weight. First end portions 13 and 14 of spring arms 11 and 12 of the second embodiment are fixed to the vehicle body by means of brackets 71, individually, as are illustrated in Fig. 12.

In a modification shown in Fig. 13, elastic spacers 75 and 76, each formed of a rubbery elastic member, are disposed individually between the base plate 55 of the joint assembly 50 and the respective side faces of the spring arms 11 and 12. An elastic spacer 77 is disposed between the curved section 18 and a rising wall 78. With use of the elastic spacers 75 to 77, the rigidity of the junctions between the assembly 50 and the arms 11 and 12 can be adjusted in some measure. The wall 78 is set up on the base plate 55.

In a third embodiment of the present invention shown in Fig. 14, a curved section 18 is fixed to a base plate 55 by means of a washer plate 80 and a bolt 81. Also, the section 18 is fixed to the plate 55 by means of a clamp member 60 and wedge members 61. Thus, a joint assembly 50 can be fixed to the curved section 18 with higher strength.

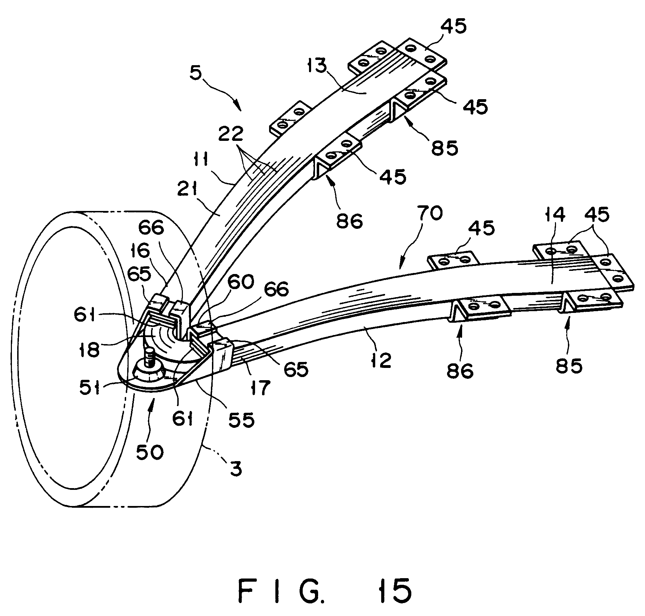

In a fourth embodiment of the present invention shown in Fig. 15, first end portions 13 and 14 of spring arms 11 and 12 are fixed to a vehicle body 1 by means of first brackets 85, and longitudinal intermediate portions 11a and 12a of the arms 11 and 12 are supported on the body 1 by means of second brackets 86. If each spring arm is thus supported at two points on the vehicle body, excessive stress can be prevented from being produced in the first end portions 13 and 14.

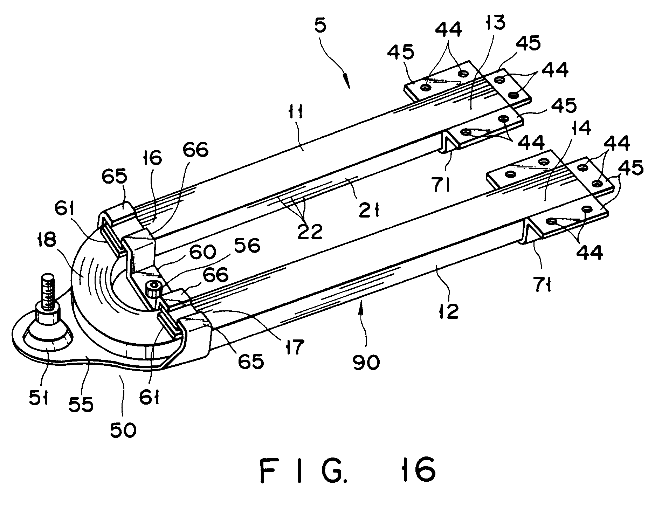

In a fifth embodiment of the present invention shown in Fig. 16, spring arms 11 and 12 of an FRP member 90 form a U-shaped configuration. A joint assembly 50 is fixed to a curved section 18 of the member 90. The arms 11 and 12 of this embodiment extend substantially parallel to each other. The U-shaped FRP member 90 is obtained by cutting an elliptic FRP product, integrally formed by the filament winding method, in the center with respect to the longitudinal direction.

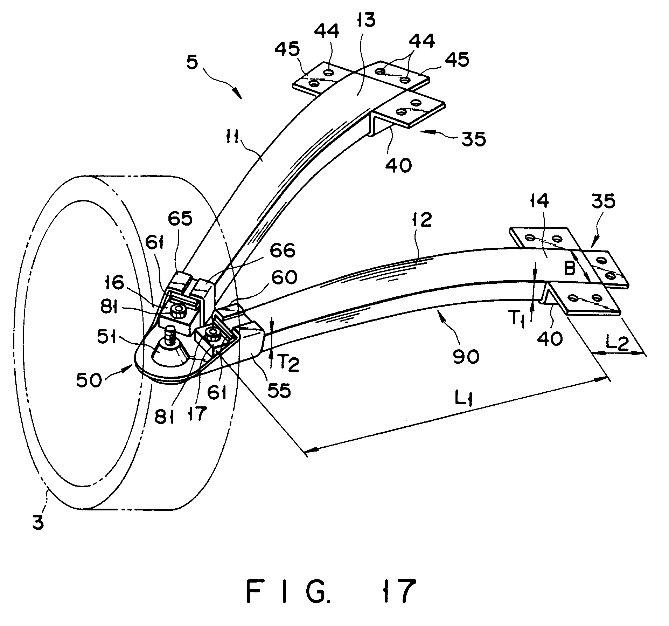

Figs. 17 to 19 show a sixth embodiment of the present invention. Two independent spring arms 11 and 12 are connected to each other at their respective second end portions 16 and 17 by means of a joint assembly 50. First end portions 13 and 14 are fixed to a vehicle body 1 by means of brackets 35 and bolts 46. In the case of an automobile with a displacement of 1,000 cc or thereabout, for example, the thickness T1 of each first end portion is 12.2 mm, the thickness T2 of each second end portion is 7.1 mm, and the width B of each spring arm is 39.6 mm. By way of example, more over, the distance L1 from each second end portion to its corresponding bracket 35 is 505 mm, and the length L2 of each bracket 35 is 100 mm.

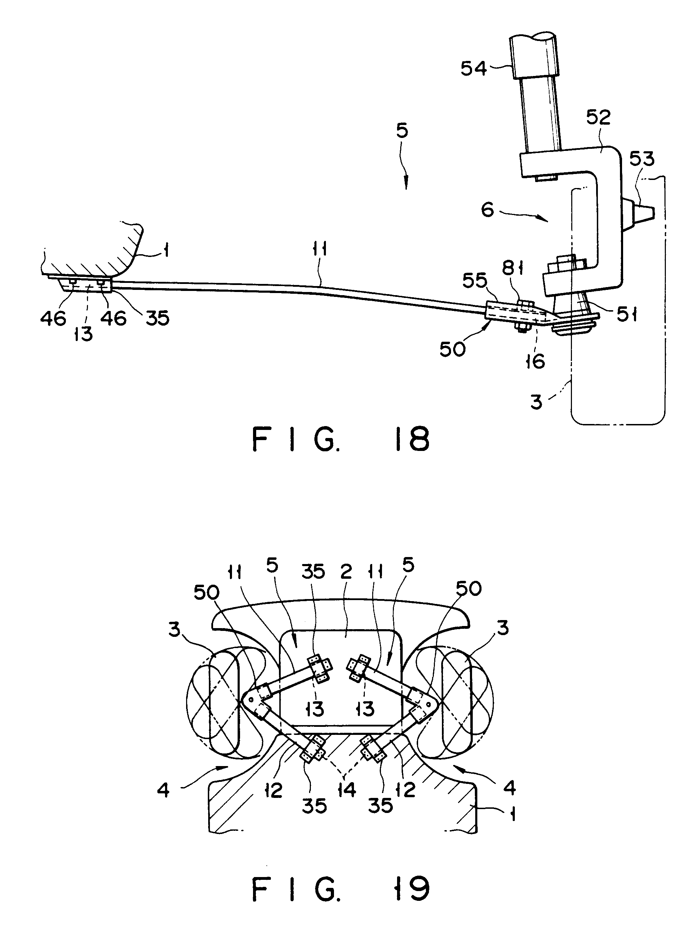

As shown in Fig. 19, the front and rear spring arms 11 and 12 are arranged in the shape of a V, as viewed from above, lest they interfere with the locus of turn of a front wheel 3. If the respective spring constants of the spring arms 11 and 12 are equal, the arms 11 and 12 bend to the same degree when a load is applied to the second end portions 16 and 17. Thus, the end portions 16 and 17 can be rigidly connected to the joint assembly 50 without any problem.

## Claims

1. A suspension system for a vehicle, which connects a vehicle body (1) and axle means (6) for supporting wheels (3), said axle means (6) including a hub carrier (52) and a ball joint means (51) which is attached to the hub carrier (52), said suspension system comprising:
a front cantilever spring arm (11) including a matrix resin (21) and fibers (22) embedded in the resin (21), said front cantilever spring arm (11) having a first end portion (13) supported on the vehicle body (1), a second end portion (16) extending toward the axle means (6), and a longitudinal intermediate portion (11a) situated between the first and second end portions (13, 16), and being capable of vertical deflection;
a rear cantilever spring arm (12) including a matrix resin (21) and fibers (22) embedded in the resin (21), said rear cantilever spring arm (12) having a first end portion (14) supported on the vehicle body (1), a second end portion (17) extending toward the axle means (6), and a longitudinal intermediate portion (12a) situated between the first and second end portions (14, 17), and being capable of vertical deflection;
supporting means (35, 71, 85) for supporting the respective first end portions (13, 14) of the front and rear cantilever spring arms (11, 12) on the vehicle body (1); and
connecting means (18, 50) for connecting the respective second end portions (16, 17) of the front and rear cantilever spring arms (11, 12) to each other;
said connecting means (18, 50) comprises a joint assembly (50), including a base plate (55), fixed to the respective second end portions (16, 17) of the spring arms (11, 12),
said base plate (55) including:
clamping means (60, 65, 66) for clamping said second end portions (16, 17) of the spring arms (11, 12); and
a horizontal projecting portion which projects substantially horizontally away from said second end portions (16, 17) of the spring arms (11, 12), said ball joint means (51) being attachable to said horizontal projecting portion,
characterized in that said base plate (55) is of metal and in that said metallic base plate (55) is isolated from said second end portions (16, 17) of the spring arms (11, 12) by spacers (61, 62, 63, 75, 76, 77) interposed between the metallic base plate (55) and said second end portions (16, 17) of the spring arms (11, 12).

2. The suspension system according to claim 1, characterized in that the respective second end portions (16, 17) of said front and rear spring arms (11, 12) are connected to each other by means of the connecting means (18, 50) so as to form a V-shaped configuration as viewed from above.

3. The suspension system according to claim 1, characterized in that the respective second end portions (16, 17) of said front and rear spring arms (11, 12) are connected to each other by means of the connecting means (18) so as to form a U-shaped configuration as viewed from above.

4. The suspension system according to claim 1, characterized in that said connecting means (18, 50) includes a curved section (18) formed integrally with the respective second end portions (16, 17) of the front and rear spring arms (11, 12), said curved section (18) having fibers (22) embedded therein so as to be continuous with the fibers in the arms (11, 12).

5. The suspension system according to claim 4, characterized by further comprising a bridge section (15) formed integrally with the spring arms (11, 12) so as to connect the respective first end portions (13, 14) of the spring arms (11, 12), said bridge section (15) having fibers (22) embedded therein so as to be continuous with the fibers in the arms (11, 12).

6. The suspension system according to claim 5, characterized in that said spring arms (11, 12), said curved section (18) and said bridge section (15) are formed by the filament winding method using the fibers (22) and the matrix resin (21) continuous throughout said arms (11, 12) and sections (15, 18).

7. The suspension system according to claim 1, characterized in that said supporting means (35, 71, 85) includes brackets (35) fitted individually on the respective first end portions (13, 14) of the spring arms (11, 12), each said bracket (35) having a plate section (40) superposed on each spring arm (11, 12), mounting base sections (45) fixeable to the vehicle body (1), and rising walls (41, 42, 43) connecting the plate section (40) and the mounting base sections (45).

8. The suspension system according to claim 1, characterized by further comprising second supporting means (86) for individually supporting the respective longitudinal intermediate portions (11a, 12a) of the front and rear spring arms (11, 12) on the vehicle body (1).

9. The suspension system according to claim 8, characterized in that said second supporting means (86) in order to be fixed to the vehicle body (1) includes brackets (86) fitted individually on the respective longitudinal intermediate portions (11a, 12a) of the spring arms (11, 12).

10. The suspension system according to claim 1, characterized in that each of said front and rear spring arms (11, 12) has a top face, a bottom face, and a front face, and at least the respective bottom faces of the arms (11, 12) are covered individually by guard means (30, 31).

11. The suspension system according to one of the claims 1 to 10, characterized in that said spacers (62, 63) are formed of a thermoplastic fiber-reinforced plastic material.

12. The suspension system according to one of the claims 1 to 10, characterized in that said spacers (75, 76, 77) are formed of a rubber elastic material.

## Patentansprüche

1. Aufhängungssystem für ein Fahrzeug zum Verbinden eines Fahrzeugaufbaus (1) mit einer Achseinrichtung (6) zum Haltern oder Tragen von Rädern (3), welche Achseinrichtung (6) einen Nabenträger (52) und eine eine an letzterem angebrachte Kugelgelenkeinheit (51) aufweist, welches Aufhängungssystem umfaßt:
einen vorderen auskragenden bzw. Krag-Federarm (11) aus einem Matrixharz (21) und in dieses eingebetteten Fasern (22), welcher vordere Krag-Federarm (11) einen am Fahrzeugaufbau (1) gehalterten ersten Endabschnitt (13), einen sich zur Achseinrichtung (6) erstreckenden zweiten Endabschnitt (16) sowie einen zwischen den ersten und zweiten Endabschnitten (13, 16) angeordneten Längszwischenabschnitt (11a), der vertikal auslenkbar ist, aufweist,
einen hinteren auskragenden bzw. Krag-Federarm (12) aus einem Matrixharz (21) und in dieses eingebetteten Fasern (22), welcher hintere Krag-Federarm (12) einen am Fahrzeugaufbau (1) gehalterten ersten Endabschnitt (14), einen sich zur Achseinrichtung (6) erstreckenden zweiten Endabschnitt (17) sowie einen zwischen den ersten und zweiten Endabschnitten (14, 17) angeordneten und vertikal auslenkbaren Längszwischenabschnitt (12a) aufweist,
ein Halterungsmittel (35, 71, 85) zum Haltern der ersten Endabschnitte (13, 14) der vorderen und hinteren Krag-Federarme (11, 12) am Fahrzeugaufbau (1) und
ein Verbindungsmittel (18, 50) zum gegenseitigen Verbinden der jeweiligen zweiten Endabschnitte (16, 17) von vorderem und hinterem Krag-Federarm (11, 12),
welches Verbindungsmittel (18, 50) eine Anschlußanordnung (50) mit einer Grundplatte (55), die an den jeweiligen zweiten Endabschnitten (16, 17) der Federarme (11, 12) befestigt ist, umfaßt,
wobei die Grundplatte (55) aufweist:
Spannmittel (60, 65, 66) zum Verspannen der zweiten Endabschnitte (16, 17) der Federarme (11, 12) und
einen horizontal vorstehenden Abschnitt, der im wesentlichen horizontal von den zweiten Endabschnitten (16, 17) der Federarme (11, 12) hinweg vorsteht und an dem die Kugelgelenkeinheit (51) anbringbar ist,
dadurch gekennzeichnet, daß die Grundplatte (55) aus Metall besteht und daß die Metall-Grundplatte (55) von den zweiten Endabschnitten (16, 17) der Federarme (11, 12) durch Abstandstücke (61, 62, 63, 75, 76, 77), die zwischen die Metall-Grundplatte (55) und die zweiten Endabschnitte (16, 17) der Federarme (11, 12) eingefügt sind, isoliert bzw. getrennt ist.

2. Aufhängungssystem nach Anspruch 1, dadurch gekennzeichnet, daß die jeweiligen zweiten Endabschnitte (16, 17) der vorderen und hinteren Federarme (11, 12) mit Hilfe des Verbindungsmittels (18, 50) so miteinander verbunden sind, daß - von oben gesehen - eine V-förmige Konfiguration gebildet ist.

3. Aufhängungssystem nach Anspruch 1, dadurch gekennzeichnet, daß die jeweiligen zweiten Endabschnitte (16, 17) der vorderen und hinteren Federarme (11, 12) mit Hilfe des Verbindungsmittels (18) so miteinander verbunden sind, daß - von oben gesehen - eine U-förmige Konfiguration gebildet ist.

4. Aufhängungssystem nach Anspruch 1, dadurch gekennzeichnet, daß das Verbindungsmittel (18, 50) einen einstückig bzw. materialeinheitlich mit den jeweiligen zweiten Endabschnitten (16, 17) der vorderen und hinteren Federarme (11, 12) geformten gekrümmten Abschnitt (18) aufweist, in welchen gekrümmten Abschnitt (18) Fasern (22) so eingebettet sind, daß sie mit den Fasern in den Armen (11, 12) fortlaufend sind.

5. Aufhängungssystem nach Anspruch 4, ferner gekennzeichnet durch eine einstückig bzw. materialeinheitlich mit den Federarmen (11, 12) so geformte Brückensektion (15), daß sie die betreffenden ersten Endabschnitte (13, 14) der Federarme (11, 12) verbindet, in welche Brückensektion (15) Fasern (22) so eingebettet sind, daß sie mit den Fasern in den Armen (11, 12) fortlaufend sind.

6. Aufhängungssystem nach Anspruch 5, dadurch gekennzeichnet, daß die Federarme (11, 12), die gekrümmte Sektion (18) und die Brückensektion (15) nach dem Fadenwickelverfahren unter Verwendung der Fasern (22) und des Matrixharzes (21), die fortlaufend durch die Arme (11, 12) und die Sektionen (15, 18) verlaufen, geformt sind.

7. Aufhängungssystem nach Anspruch 1, dadurch gekennzeichnet, daß das Halterungsmittel (35, 71, 85) jeweils einzeln an den betreffenden ersten Endabschnitten (13, 14) der Federarme (11, 12) angesetzte Halterungen (35) aufweist, wobei jede Halterung (35) eine jeden Federarm (11, 12) übergreifende (superposed) Plattensektion (40), am Fahrzeugaufbau (1) befestigbare Anbaubasissektionen (45) sowie die Plattensektion (40) und die Anbaubasissektionen (45) verbindende hochgezogene Wände (41, 42, 43) aufweist.

8. Aufhängungssystem nach Anspruch 1, ferner gekennzeichnet durch ein zweites Halterungsmittel (86) zur einzelnen bzw. getrennten Halterung der jeweiligen Längszwischenabschnitte (11a, 12a) der vorderen und hinteren Federarme (11, 12) am Fahrzeugaufbau (1).

9. Aufhängungssystem nach Anspruch 8, dadurch gekennzeichnet, daß das zweite Halterungsmittel (86) für Befestigung am Fahrzeugaufbau (1) Halterungen (86) aufweist, die einzeln an den jeweiligen Längszwischenabschnitten (11a, 12a) der Federarme (11, 12) angesetzt sind.

10. Aufhängungssystem nach Anspruch 1, dadurch gekennzeichnet, daß jeder der vorderen und hinteren Federarme (11, 12) eine Oberseite, eine Unterseite und eine Vorder- oder Stirnseite aufweist und zumindest die jeweiligen Unterseiten der Arme (11, 12) einzeln durch Schutzmittel (30, 31) abgedeckt sind.

11. Aufhängungssystem nach einem der Ansprüche 1 bis 10, dadurch gekennzeichnet, daß die Abstandstücke (62, 63) aus einem thermoplastischen, faserverstärkten Kunststoff geformt sind.

12. Aufhängungssystem nach einem der Ansprüche 1 bis 10, dadurch gekennzeichnet, daß die Abstandstücke (75, 76, 77) aus einem gummielastischen Werkstoff geformt sind.

## Revendications

1. Système de suspension de véhicule qui relie la caisse (1) du véhicule et un moyen formant essieu (6) destiné à soutenir des roues (3), ledit moyen formant essieu (6) comprenant un support de moyeu (52) et un moyen formant rotule (51) qui est fixé au support de moyeu (52), ledit système de suspension comprenant :
- un bras élastique antérieur (11) en porte-à-faux, comprenant une matrice de résine (21) et des fibres (22) noyées dans la résine (21), ledit bras élastique antérieur (11) en porte-à-faux comprenant une première partie d'extrémité (13) supportée sur la caisse (1) du véhicule, une seconde partie d'extrémité (16) s'étendant en direction du moyen formant essieu (6) et une partie longitudinale intermédiaire (11a) située entre les première et seconde parties d'extrémités (13, 16) et capable de fléchir verticalement,
- un bras élastique postérieur (12) en porte-à-faux, comprenant une matrice de résine (21) et des fibres (22) noyées dans la résine (21), ledit bras élastique postérieur (12) en porte-à-faux comprenant une première partie d'extrémité (14) supportée sur la caisse (1) du véhicule, une seconde partie d'extrémité (17) s'étendant en direction du moyen formant essieu (6) et une partie longitudinale intermédiaire (12a) située entre les première et seconde parties d'extrémités (14, 17) et capable de fléchir verticalement,
- des moyens de support (35, 71, 82) pour supporter les premières parties d'extrémités respectives (13, 14) des bras élastiques antérieur et postérieur (11, 12) en porte-à-faux sur la caisse (1) du véhicule, et
- des moyens d'accouplement (18, 50) pour coupler l'une à l'autre les secondes parties d'extrémités respectives (16, 17) des bras élastiques antérieur et postérieur (11, 12) en porte-à-faux, lesdits moyens d'accouplement (18, 50) comprenant un ensemble de liaison (50) qui inclut une plaque de base (55) fixée aux secondes parties d'extrémités respectives (16, 17) des bras élastiques antérieur et postérieur (11, 12) en porte-à-faux, ladite plaque de base (55) comprenant :
- des moyens d'accrochage (60, 65, 66) pour accrocher lesdites secondes parties d'extrémités (16, 17) des bras élastiques (11, 12) en porte-à-faux, et
- une partie en saillie horizontale qui dépasse sensiblement à l'horizontale desdites secondes parties d'extrémités (16, 17) des bras élastiques (11, 12), ledit moyen formant rotule (51) pouvant être fixé à ladite partie en saillie horizontale, caractérisé en ce que ladite plaque de base (55) est en métal et en ce que ladite plaque métallique de base (55) est isolée desdites secondes parties d'extrémités (16, 17) des bras élastiques (11, 12) par des- entretoises (61, 62, 63, 75, 76, 77) interposées entre la plaque métallique de base (55) et lesdites secondes parties d'extrémités (16, 17) des bras élastiques (11, 12).

2. Système de suspension selon la revendication 1, caractérisé en ce que les secondes parties d'extrémités respectives (16, 17) des bras élastiques antérieur et postérieur (11, 12) sont couplées l'une à l'autre par le moyen d'accouplement (18, 50) de façon à donner en vue de dessus une configuration en forme de V.

3. Système de suspension selon la revendication 1, caractérisé en ce que les secondes parties d'extrémités respectives (16, 17) des bras élastiques antérieur et postérieur (11, 12) sont couplées l'une à l'autre par le moyen d'accouplement (18) de façon à donner en vue de dessus une configuration en forme de U.

4. Système de suspension selon la revendication 1, caractérisé en ce que ledit moyen d'accouplement (18, 50) comprend une partie courbe (18) qui fait corps avec les secondes parties d'extrémités respectives (16, 17) des bras élastiques antérieur et postérieur (11, 12), ladite partie courbe (18) contenant des fibres (22) noyées dans cette partie pour être continues aux fibres se trouvant dans les bras (11, 12).

5. Système de suspension selon la revendication 4, caractérisé en ce qu'il comprend en outre une partie formant pont (15) qui fait corps avec les bras élastiques (11, 12) de manière à coupler les premières parties d'extrémités respectives (13, 14) des bras élastiques (11, 12), ladite partie formant pont (15) contenant des fibres (22) noyées dans cette partie pour être continues aux fibres se trouvant dans les bras (11, 12).

6. Système de suspension selon la revendication 5, caractérisé en ce que lesdits bras élastiques (11, 12), ladite partie courbe (18) et ladite partie formant pont (15) sont formés par un procédé d'enroulement de filament utilisant les fibres (22) et la matrice de résine (21) en continu dans lesdits bras (11, 12) et lesdites parties (15, 18).

7. Système de suspension selon la revendication 1, caractérisé en ce que lesdits moyens de support (35, 71, 85) comprennent des pattes d'attache (35) montées individuellement sur les premières parties d'extrémités respectives (13, 14) des bras élastiques (11, 12), chaque patte d'attache (35) comprenant une partie plate (40) superposée à chaque bras élastique (11, 12), des parties formant bases de montage (45) pouvant être fixées à la caisse (1) du véhicule et des parois verticales (41, 42, 43) qui relient la partie plate (40) et les parties formant bases de montage (45).

8. Système de suspension selon la revendication 1, caractérisé en ce qu'il comprend en outre un second moyen de support (86) pour supporter individuellement les parties longitudinales intermédiaires respectives (11a, 12a) des bras élastiques antérieur et postérieur (11, 12) sur la caisse (1) du véhicule.

9. Système de suspension selon la revendication 8, caractérisé en ce que ledit second moyen de support (86) comprend, pour être fixé à la caisse (1) du véhicule, des pattes d'attache (86) montées individuellement sur les parties longitudinales intermédiaires respectives (11a, 12a) des bras élastiques (11, 12).

10. Système de suspension selon la revendication 1, caractérisé en ce que chacun desdits bras élastiques antérieur et postérieur (11, 12) comprend une face supérieure, une face inférieure et une face avant, et en ce que les faces avant respectives au moins des bras (11, 12) sont individuellement recouvertes par des moyens de protection (30, 31).

11. Système de suspension selon l'une des revendications 1 à 10, caractérisé en ce que lesdites entretoises (62, 63) sont faites d'une matière plastique renforcée par des fibres thermoplastiques.

12. Système de suspension selon l'une des revendications 1 à 10, caractérisé en ce que lesdites entretoises (75, 76, 77) sont faites d'un matériau élastique de type caoutchouc.
